# EUROPEAN PATENT SPECIFICATION

(11) **EP 2 243 066 B1**
(45) Date of publication and mention of the grant of the patent: **07.11.2018**
(21) Application number: 08868690.2
(22) Date of filing: 31.12.2008
(51) Int. Cl.: G06F 3/01, G06F 3/03

(54) **3D POINTING SYSTEM**
3D-ZEIGESYSTEM
SYSTÈME DE POINTAGE 3D

(30) Priority: 31.12.2007 US 3705
(43) Date of publication of application: 27.10.2010
(73) Proprietor: Microsoft International Holdings B.V., 1043 BW Amsterdam (NL)
(72) Inventor: KLIER, Zvika, 69938 Tel Aviv (IL); KATZ, Sagi, 20692 Yokneam (IL); MARDER, Mattias, 32716 Haifa (IL); YAHAV, Giora, 34814 Haifa (IL)
(74) Representative: Goddar, Heinz J.
(86) International application number: PCT/IL2008/001703
(87) International publication number: WO 2009/083984

(56) References cited:
- US-A1- 2007 024 579
- YI-PING HUNG ET AL: "Free-hand pointer by use of an active stereo vision system" PATTERN RECOGNITION, 1998. PROCEEDINGS. FOURTEENTH INTERNATIONAL CONFE RENCE ON BRISBANE, QLD., AUSTRALIA 16-20 AUG. 1998, LOS ALAMITOS, CA, USA,IEEE COMPUT. SOC, US, vol. 2, 16 August 1998 (1998-08-16), pages 1244-1246, XP010297853 ISBN: 978-0-8186-8512-5
- MICHAEL VAN DEN BERGH ET AL: "Perceptive User Interface, a Generic Approach" COMPUTER VISION IN HUMAN-COMPUTER INTERACTION LECTURE NOTES IN COMPUTER SCIENCE;;LNCS, SPRINGER, BERLIN, DE, vol. 3766, 1 January 2005 (2005-01-01), pages 60-69, XP019022557 ISBN: 978-3-540-29620-1
- KELVIN CHENG, MASAHIRO TAKATSUKA: "Estimating Pointing Direction in 3D using Monocular Tracking for Direct Interaction with Large Screens - Report 599" October 2006 (2006-10), VISLAB SCHOOL OF INFORMATION TECHNOLOGIES THE UNIVERSITY OF SYDNEY , XP002521763 the whole document
- KELVIN CHENG ET AL: "Estimating Pointing Direction in 3D using Monocular Tracking for Direct Interaction with Large Screens - Report 599", 1 October 2006 (2006-10-01), 20061001, PAGE(S) 1, XP002521763,

## Description

### FIELD

This invention relates to human-computer interaction (HCI) technology.

### BACKGROUND

Human-computer interaction (HCI) is the study of interaction between people and computers. People generally interact with computers through a keyboard and a mouse, to enter alphanumeric data such as text, and to identify objects of interest on a computer screen, respectively. Computers are also often embedded in other devices that people encounter on a daily basis, such as household appliances, automobiles, retail displays, and industrial equipment. These devices usually require users to press a button or touch a screen to communicate their instructions. A common element in all of these forms of interaction is that they have an intermediary object between the user and the computer with which intermediary object the user makes direct physical contact to interact with the computer.

In some applications, it is desirable to eliminate the intermediary device and have direct interaction between users and computers. For example, it is often easier for a user to simply point to a location rather than try to explain it to a computer by typing or even using a mouse. In other cases, such as when driving a vehicle, an appropriate form of communication with a computer is often by voice command. Some computers are used by many people, such as a computer that controls a public kiosk. Intermediary devices used in such cases are prone to breakdown and to becoming unhygienic, due to the device being touched and used by large numbers of users.

Gesture recognition is the focus of some HCI research in the area of direct user-computer interaction. People commonly interact with one another by using gestures, for example, by shaking one's head to indicate "no", or by pointing to an object of interest. A computer capable of gesture recognition could potentially free a user in some instances from having to type, point and click, or press a button to convey instructions.

An example of a gesture controlled human-computer interface is provided in U.S. Pat. 6,950,534, to Cohen. In the system described, a user stands in front of a self-service machine and gestures an intention with respect to the product or service being offered. The system takes an image of the user and runs pattern recognition algorithms to locate the relevant part of the image and identify the gesture. In its analysis the system distinguishes between static and dynamic gestures, and uses parameterization and "predictor bins" to help in determining the gesture.

U.S. Pat. 6,072,494, to Nguyen, creates an initial background model by recording an image of a scene before the person who will perform the gesture enters the scene. After processing, the image is compared to a gesture database to identify the particular gesture being exhibited. The Nguyen patent describes how the system can be used to recognize such gestures as flapping arms, jumping, and squatting.

Gokturk, U.S. Pat. 7,340,077, uses 3D imaging to obtain an image which provides distance information to different parts of the user's body. Body posture is determined from the image by determining the shape and the pose of the body part of interest. Further processing involves identifying the gesture from a gesture database.

A related area of HCI research is recognition of pointing gestures (hereinafter also "pointing recognition"). Examples of the application of this technology are discussed in a number of published papers. Nickel and Stiefelhagen, "Recognition of 3D-Pointing Gestures for Human-Robot Interaction" (Proceedings of Humanoids 2003, Karlsruhe, Germany), for example show a system in which a user interacts with a robot by pointing. The system uses a fixed-baseline stereo camera connected to a standard PC. After an image is taken, the head and hands are identified by skin color. The movement of the hands and pointing gestures are tracked by watching the trajectory of the pointing hand and breaking down the movement into three phases, "Begin", "Hold", and "End". Hidden Markov Models are used to aid in tracking. After a pointing gesture is detected, a head-hand line and a forearm line are extracted to determine a pointing direction.

A pointing system for use by the public to view an art display is discussed in Malerczyk, "Interactive Museum Exhibit Using Pointing Gesture Recognition" (Journal of WSCG, vol. 12, no. 1-3, Feb. 2004). In this system users are required to stand in a precisely defined area so that two cameras fixed overhead can acquire a clear and consistent view of the user's pointing finger. The software applies pattern recognition techniques to locate the user's extended index finger to determine the spot on the display to which the user is pointing. The user points to select an image to spotlight or magnify selected areas of the image for further study.

A paper by Do, Kim, et al. "Soft Remote Control System using Hand Pointing Gestures" (Int'l. Journal of Human-friendly Welfare Robotic Systems, vol. 3, no. 1 2002) shows a system of remote control of home appliances by recognition of a user's hand pointing gestures. The system is an "intelligent room" that uses three cameras mounted on the ceiling to track a user's hand and recognize hand orientation. It is required that there be only one user in the room, and that pointing be done with the user's right arm and right hand. Skin color is used to locate the head and hands, and the multiple views provided by the overhead cameras are used to determine the orientation of the pointing hand. Confirmation is provided by the system when the user successfully points to an appliance.

The papers "Free-hand pointer by use of an active stereo vision system" by Yi-Ping Hu et al (Proceedings of the Fourteenth International Conference on Pattern Recognition 1998, pp. 1244-1246 vol.2), "Perceptive User Interface, a Generic Approach" by Van den Bergh et al. (in Computer Vision in Human-Computer Interaction. HCI 2005. Lecture Notes in Computer Science, vol 3766, 2005) and "Estimating Pointing Direction in 3D using Monocular Tracking for Direct Interaction with Large Screens" by Cheng et al. (Technical report / University of Sydney. School of Information Technologies; no. 599, 2006) show different algorithms for determining the pointing direction of a person based on 2D images captured by one or two cameras.

### SUMMARY

An aspect of some embodiments of the invention relates to providing an improved human-computer interaction system, hereinafter referred to as a "3D pointing system", for determining a region of interest ("ROI") pointed to by a person (hereinafter also "pointing person").

An aspect of some embodiments of the invention relates to providing a 3D pointing system that provides a pointing direction reponsive to two relatively localized body regions of a person or a body region and an instrument held by the person.

In an embodiment of the invention, a first localized region comprises an eye of the pointing person, and a second localized region comprises a fingertip or finger of the pointing person. In some embodiments, the second localized region comprises a tip of a pointing instrument such as a pen or a stick held in the person's hand. The two localized regions are used to define a line which substantially connects the two localized regions. The 3D pointing system uses the line connecting the localized regions to determine the pointing direction, and therefrom the ROI pointed to by the person. This information may be provided to a computer, which optionally uses the ROI to initiate a responsive action.

An aspect of some embodiments of the invention relates to providing the 3D pointing system as an interface between a pointing person and a computer or a device controlled by a computer. The 3D pointing system in these embodiments enables the person to operate or interact with the computer or computer-controlled device by pointing at a region of interest (ROI).

In accordance with some embodiments of the invention, the 3D pointing system comprises a 3D camera capable of providing an image of a scene and a 3D depth map of the scene and a processor that processes the image and depth map to determine a pointing direction. The processor processes the image to locate in the image the first relatively localized region comprising the pointing person's eye and the second relatively localized region comprising the tip of the pointing finger or instrument.

The processor uses depth information from the depth map corresponding to the two localized image regions, as well as the location of the two localized image regions in the image to determine 3D spatial coordinates for each of the regions. The processor uses the coordinates for each of the regions to determine a line in space. A direction of pointing indicated by the person is assumed to be substantially coincident with the line, in a direction from the person's eye towards the person's finger. Optionally, the processor uses the line to determine spatial coordinates for the ROI. Optionally, the processor communicates the location coordinates of the ROI to an outside computer over a communication link.

In an embodiment of the invention, the processor determines location of the two localized image regions in the image responsive to reflectivity of features in the scene that they image. For example, location of a first image region that images the pointing person's eye may be determined by identifying a region in the image exhibiting reflectivity typical of "red-eye". Optionally, reflectivity of a feature imaged in a region of the image provided by the 3D camera is determined using a method described in US Patent publication US 2010/0026850 entitled "Imaging System" filed on July 29, 2008.

According to an aspect of some embodiments of the invention a 3D pointing system provides a pointing direction reponsive to two relatively localized regions of a pointing instrument or device held by the person. Such an device may be, by way of example, an accessory used to ineract with a computer game, such as for example, a pointer or a model pistol. The two localized regions of the pistol may comprise front and back sights of the pistol or a front end of the pistol barrel and a "hammer" of the pistol. Optionally, the pointing device comprises user activated components indicating activation of the device. For example, the model pistol may have a light that is turned on and off when the model pistol is fired by activation of a trigger. Optionally, the pointing device comprises identifying markings or features, such as for example highly reflective features, features of easily identifiable shape, or illuminated features, that identify the first and second localized regions and facilitate identification of the regions from an image of the device.

An aspect of some embodiments of the invention relates to providing the 3D pointing system with a controllable light source. The 3D pointing system uses the light source to direct a distinctive light pattern at an ROI pointed to by a pointing person, to confirm to the person that the ROI determined by the 3D pointing system correctly reflects the person's intention. The person optionally uses the feedback information provided by the directed light to adjust his or her direction of pointing until the determined ROI is satisfactory. In some embodiments, the controllable light source comprises an adaptive illumination system such as that described in U.S. Patent 6,993,255.

An aspect of some embodiments of the invention relates to providing a lecture hall comprising a 3D pointing system having a light source. The 3D pointing system identifies the location of a particular student pointed to by a lecturer from among a plurality of students in the lecture hall being lectured to by the lecturer by illuminating the particular student.

An aspect of some embodiments of the invention relates to providing firefighting equipment comprising a 3D pointing system. In an embodiment of the invention, the firefighting equipment comprises a fire hose coupled to an aiming apparatus controllable to aim the fire hose in a desired direction. When the fire fighting equipment is in use to fight a fire, a firefighter at a distance from the hose can direct the hose to deliver water to a desired region, *i.e.* an ROI, of the fire by pointing to the region. In some embodiments, the 3D pointing system includes an adaptive illumination system that shines a distinctive light at the ROI of the fire. The distinctive light provides feedback to the firefighter, confirming that water hosed at the fire by the firehose will be directed to the specific location of the fire designated by the firefighter.

In accordance with some embodiments of the invention the computer-controlled device comprises a vending machine having a visual display that shows items available for sale. The 3D camera is positioned so that its field of view includes a person accessing the vending machine to make a purchase. The person points to an item in the display to be purchased. The 3D pointing system determines the region of the display being pointed to and optionally passes the location information to a suitable controller (hereinafter a "vending machine computer"). The vending machine computer uses the location information to determine which item is selected for purchase and sends an appropriate signal to dispense the selected item to the user.

An aspect of some embodiments of the invention relates to providing a smart conference room comprising a 3D pointing system and a video screen controllable responsive to control signals generated by the 3D pointing system. A presenter in the conference room, may stand near the screen and a number of attendees may be seated at a conference table in the room. When the presenter or any of the attendees point to the screen, the 3D pointing system determines the ROI on the screen being pointed to by each person. The identity of each pointing person could be determined by any method known in the art, and could include for example, identifying the location of the person at the conference table, or assigning each person a uniquely identifiable patch or pointer. The controller sends the ROI information and the information identity of the person who pointed to the particular ROI to the computer controlling the electronic screen. The computer uses this information to illuminate the electronic screen at each ROI being pointed to with a distinctive light pattern corresponding to the information identity of the person pointing to that ROI. In this way all of the individual conference participants can identify the parts of the screen being pointed to by any of the other participants.

According to an aspect of some embodiments of the invention, the 3D pointing system initiates interaction with a person by predetermining and displaying a ROI to which the person is instructed to respond by pointing.

In a game example, in accordance with some embodiments of the invention, the 3D pointing system shines a spot of light at a random part of a room. The person reacts by pointing to the spot as quickly as possible. The 3D pointing system could also shine three spots of light, for example, at random parts of the room. The spots might be distinct from one another in some way, for example having different colors. The person is instructed to point to a spot having a particular color as fast as possible, or to point to different colored spots in a particular order as quickly as possible.

In accordance with some embodiments of the invention the 3D pointing system is used to train the reaction time of security personnel. The system flashes an image of a criminal intruder at random, to which the person reacts by pointing a gun. The 3D pointing system takes a 3D image of the scene and processes the image to determine the ROI being pointed to by the person. If the ROI is located within the image of the criminal intruder, the 3D pointing system provides feedback to the person confirming that the person has successfully "shot" the intruder. In such embodiments the tip of the gun could be used as the second localized region identified from the 3D image of the scene.

In accordance with an embodiment of the invention, a 3D pointing system is used in a "first person shooter" game in which a player observes and participates in the action of a computer game environment from his own point of view. An avatar representing the player is shown in the computer game environment and is controlled by the player's motion. To control a direction in which the avatar operates a device, such as, by way of example, a gun or a camera, the player points with his or her hand. The 3D pointing system determines the direction in which the player is pointing and controls the avatar to operate the device in a corresponding direction in the computer game environment. Currently popular FPS games are Crysis® published by Electronic Arts, Inc. of Redwood City CA, Quake4®, Doom4®, Call of Duty4: Modern Warfare, all published by Activision Publishing, Inc. of Santa Monica, CA, among numerous others.

An aspect of some embodiments of the invention relates to providing a musical device comprising a 3D pointing system coupled to a plurality of electronically controlled musical instruments, and a suitable controller and display. The controller controls the display to show the different instruments to a person who points to one or more of the displayed instruments. When the person points to a particular instrument, the controller produces a sound corresponding to the instrument.

An aspect of some embodiments of the invention relates to providing a "smart movie theater" comprising a 3D pointing system and an illumination guide system to help latecomers find seats. Upon such latecomers entering the theatre, a suitable computer controls the illumination guide system to illuminate available seats. The latecomers scan the theatre and point to their preferred seat or group of seats. The seats that are pointed to are recognized by the 3D pointing system, which signals the light system to stop illuminating seats not pointed to and continue illuminating the pointed to seats, until the latecomers are seated in their selected seats. The invention is defined by the independent claims 1, 11 and 12. The dependent claims define advantageous embodiments. These and other embodiments are further detailed below. The scope of the invention is defined by the claims.

### BRIEF DESCRIPTION OF FIGURES

The invention will be more clearly understood by reference to the following description of embodiments thereof read in conjunction with the figures attached hereto. In the figures, identical structures, elements or parts which appear in more than one figure are generally labeled with the same numeral in all the figures in which they appear. Dimensions of components and features shown in the figures are chosen for convenience and clarity of presentation and are not necessarily shown to scale. The figures are listed below.
Fig. 1 shows a schematic view of a 3D pointing system in accordance with an embodiment of the invention;
Fig. 2A shows a schematic view of a 3D pointing system in accordance with an embodiment of the invention;
Fig. 2B shows a schematic view of a depth map acquired by the 3D pointing system in accordance with an embodiment of the invention;
Fig. 2C shows a schematic view of an image acquired by the 3D pointing system in accordance with an embodiment of the invention;
Figs. 3A and 3B show schematic views of an image processed by the 3D pointing system in accordance with an embodiment of the invention;
Figs. 4A and 4B show schematic views of a 3D pointing system controlling a device, in accordance with an embodiment of the invention;
Fig. 5 shows a schematic view of an example lecture hall application in accordance with an embodiment of the invention;
Fig. 6 shows a schematic view of firefighting equipment comprising a 3D pointing system, in accordance with an embodiment of the invention;
Fig. 7 shows a schematic view of a vending machine comprising a 3D pointing system, in accordance with an embodiment of the invention;
Fig. 8 shows a schematic view of a "smart" conference room comprising a 3D pointing system, in accordance with an embodiment of the invention;
Figs. 9A-9D show schematic views of a computer game apparatus comprising a 3D pointing system, in accordance with an embodiment of the invention;
Fig. 10 shows a schematic view of a training system comprising a 3D pointing system, in accordance with an embodiment of the invention;
Fig. 11 shows a schematic view of a first person shooter game comprising a 3D pointing system, in accordance with an embodiment of the invention;
Figs. 12A and 12B show schematic views of a music making apparatus comprising a 3D pointing system, in accordance with an embodiment of the invention;
Fig. 13 shows a schematic view of a smart theater comprising a 3D pointing system, in accordance with an embodiment of the invention;
Fig. 14 shows a schematic view of a person gesturing to control a computer using a 3D pointing system in accrodance with an embodiment of the invention; and
Fig. 15 shows a schematic view of pointing device being used to control a computer using a 3D pointing system, in accordance with an embodiment of the invention.

### DETAILED DESCRIPTION OF EMBODIMENTS

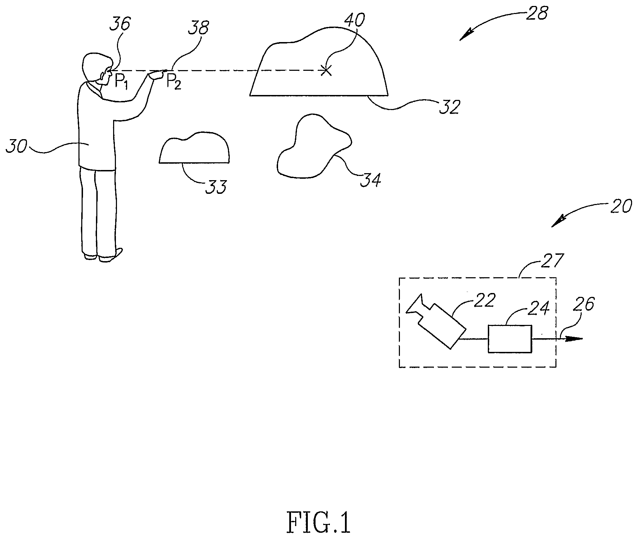

Figure 1 shows a schematic 3D pointing system **20** in accordance with an embodiment of the invention. 3D pointing system **20** optionally comprises at least one 3D camera **22** and a processor **24.** In Fig. 1 and figures that follow, at least one 3D camera 22 is shown as a single camera and referred to as such in discussion of the figure. However, it is noted that in some embodiments of the invention, to provide a field of view appropriate to an application for which the 3D pointing system is used, at least one 3D camera **22** requires, and is understood to comprise, a plurality of 3D cameras. A 3D camera generally produces a 3D image or "depth map" of a scene that provides distances of objects in the scene from the camera. 3D camera **22** can use any 3D imaging technology such as, for example, stereoscopy or time of flight. Examples of time of flight 3D cameras are described, for example, in U.S. Patent 7,224,384 and International Patent Publication WO 00/19705. In addition to producing a 3D image, 3D camera **22** also, optionally, acquires a 2D image, also referred to as a "contrast image", of the scene. Processor **24** processes the 3D and 2D images produced by 3D camera **22** and optionally communicates with a device such as a computer (not shown in Fig. 1) over a communication link **26.** Communication link **26** may comprise any wire or wireless channel known in the art. Components of 3D pointing system **20** are optionally located inside a housing schematically represented by a dashed border **27.**

Figure 1 also shows a scene **28** within the field of view of 3D camera **22.** Scene **28** contains a pointing person **30** and, by way of example, three randomly sized and shaped objects **32, 33,** and **34.** Person **30** is assumed to point to a region of interest (ROI) by looking at the ROI, extending his arm, and aligning an eye **36** and a fingertip **38** from an extended arm so that eye **36,** fingertip **38,** and the ROI in space are substantially in line. In Fig. 1 person **30** points to an ROI **40** located on object **32.** 3D pointing system **20** determines a location in space of the ROI pointed to by person **30,** and optionally transmits spatial coordinates of the ROI through communication link **26** to another device (not shown in Fig. 1) that uses the coordinates. For additional clarity, eye **36,** fingertip **38,** and ROI **40** may also be shown in the figures as letter symbols "P₁", "P₂", and "X", respectively.

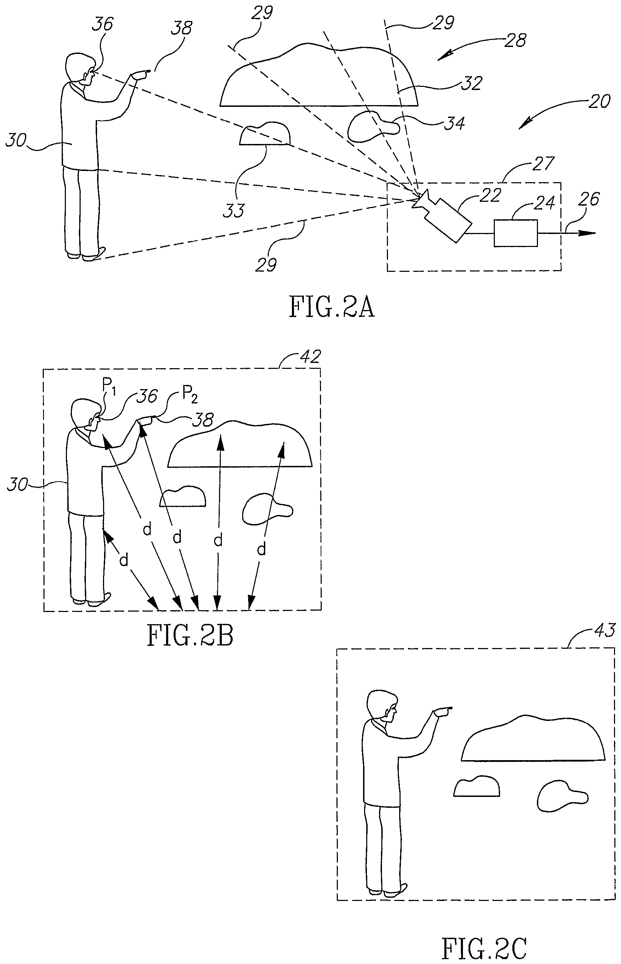

Figure 2A schematically shows 3D camera **22** acquiring a 3D image of scene **28.** In the figure, dashed lines **29** are shown emanating from 3D camera **22** to schematically represent, by way of example, transmission of light pulses used in a time of flight method of 3D imaging. Figure 2B schematically shows a resulting 3D image or depth map **42.** Distances labeled "d" from 3D camera **22** to a sampling of points in 3D image **42** are shown in depth map **42** for illustration purposes. As indicated in Fig. 2B, two points P₁ and P₂ in 3D image **42** for which distances have been acquired are the person's eye **36** and fingertip **38.** Figure 2C schematically shows a 2D image **43** of scene **28** also taken by 3D camera **22.**

3D image or depth map **42** and 2D image **43** are received by processor **24,** which applies any of various image processing techniques to the images to identify person's eye **36** and fingertip **38.** In an embodiment of the invention, processor **24** determines the location of eye **36** and fingertip **38** responsive to the reflectivity of these features in 2D image **43.** For example, location of eye **36** may be determined by identifying regions in 2D image **43** exhibiting reflectivity typical of retroreflection known as "red-eye". Optionally, reflectivity of a feature imaged in a region of the image provided by the 3D camera is determined using a method described in US Patent Application 61/084,263, referenced above. Processor **24** further uses the depth of points P₁ and P₂, *i.e.* eye **36** and fingertip **38,** obtained from depth map **42** to determine 3D spatial coordinates for eye **36** and fingertip **38.**

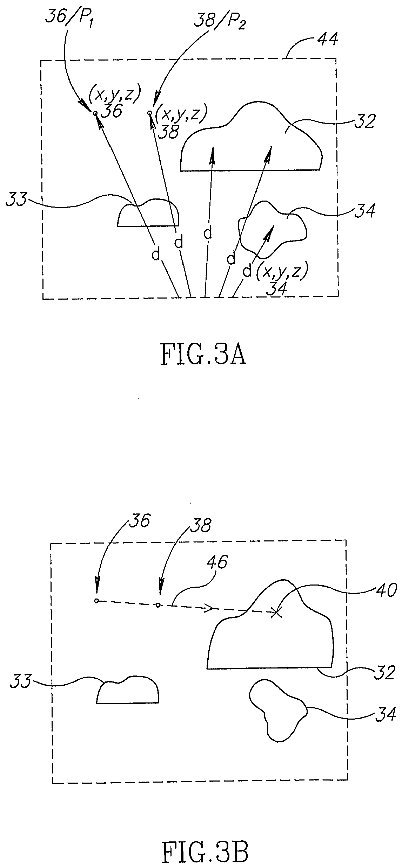

Figure 3A shows a resulting, very schematic, 3D image **44** representing a 3D map of of scene 28 comprising 3D spatial coordinates for identified eye region **36** (P₁) and pointing tip region **38** (P₂), as well as 3D spatial coordinates of the other elements of scene **28** comprising objects **32, 33,** and **34.** The 3D coordinates for a given region in scene 28 are indicated by "(x,y,z)" subscripted with the number labeling the region. The image of person **30** is not needed for further processing and has been removed from image **44** for illustration purposes.

When processing the image, it can be appreciated that the relative size of any point in the image could vary over a wide range. For example, person **30** may be located a relatively large distance away from 3D camera **22** and accordingly appear relatively small in 3D image **42.** In that case a single pixel or small group of pixels in 3D image **42** might image a relatively large region from scene **28** that comprises not only the person's eye but also adjacent facial features. In another case, where person **30** is closer, a region comprising the person's eye **36** or part of the eye exclusively might image onto a group of pixels in 3D image **42.** Accordingly, processor **24** functions to identify a relatively localized region comprising the person's eye **36** (hereinafter also called the "eye region" or "localized eye region"), and a relatively localized region around person's fingertip or pointing device **38** (hereinafter also called the "pointing tip region" or "localized pointing tip region").

Using 3D coordinates from 3D image 44 for localized eye region 36 and localized pointing region **38** processor **24** determines a "pointing" line **46** in space schematically indicated in Fig. 3B. A direction of pointing indicated by person **30** is assumed to be substantially coincident with pointing line **46** in a direction from eye region **36** towards fingertip **38.** Optionally, processor **24** calculates an intersection of pointing line **46** with a feature present in image **44** to determine the region of interest. As shown in Fig. 3B, the point of intersection is ROI **40,** located on object **32.** Optionally, processor **24** communicates the location coordinates of ROI **40** for use by another computer over communication link **26** (Fig. 1).

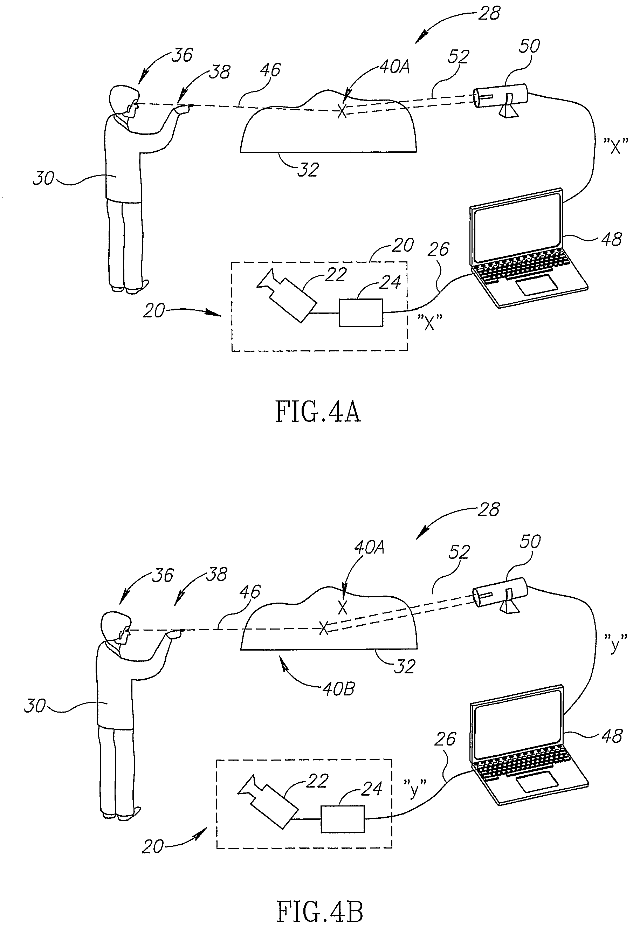

Figs. 4A and 4B show an application of 3D pointing system **20** in which a beam of light is directed to light up ROI **40** pointed at by person **30.** 3D pointing system **20** optionally connects to a computer **48** through communication link **26,** and computer **48** connects to and controls a light source **50.** It can be appreciated that while computer **48** and light source **50** are shown as separate devices in Figs. 4A and B, computer **48** could also be integrated into light source **50.**

Light source **50** is configured to rotate in both a horizontal and vertical plane so that it can direct a beam of light **52** in substantially any direction in 3D space. Upon receiving the coordinates of ROI **40** from controlling computer **48,** light source **50** adjusts its orientation and directs a beam of light at ROI **40.** For example, in Fig. 4A person **30** points to ROI **40A.** 3D pointing system **20** identifies the 3D coordinates of ROI **40A** and communicates the coordinates to computer **48** over communication link **26.** Computer **48** transmits the coordinates to light source **50,** which responds by shining light beam **52** at ROI **40A.** If person **30** then shifts his eye and hand and points to a different ROI **40B,** located for example on another part of object **32.** 3D pointing system **20** identifies the new ROI, communicates the coordinates of ROI **40B** to computer **48,** and light source **50** re-directs light beam **52** to ROI **40B.**

It can be appreciated that by changing the direction of pointing, person **30** causes light source **50** to change the direction of light beam **52** in space. Person **30** effectively controls light source **50** by the action of pointing. 3D pointing system **20** acts as an interface between person **30** and computer **48** or computer-controlled light source **50,** since 3D pointing system **20** translates the physical pointing motion of person **30** into a numerical coordinate format compatible with light source **50.**

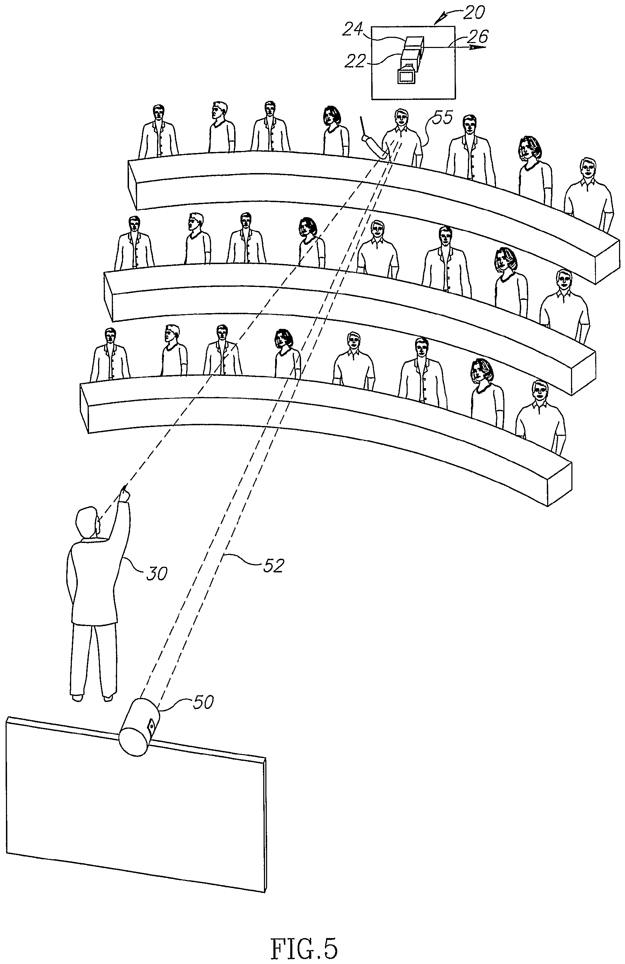

Fig. 5 shows an application of a pointing-directed lighting system similar to that of Figs. 4A and B. The application is a lecture hall in which person **30** is a lecturer presenting to a room of students. When the lecturer wishes to call upon a particular student **55** he or she points to the student. Since two or more students sitting near one another might raise their hands at the same time, 3D pointing system **20** directs light beam **52** at the selected student so there is no confusion as to which student should answer.

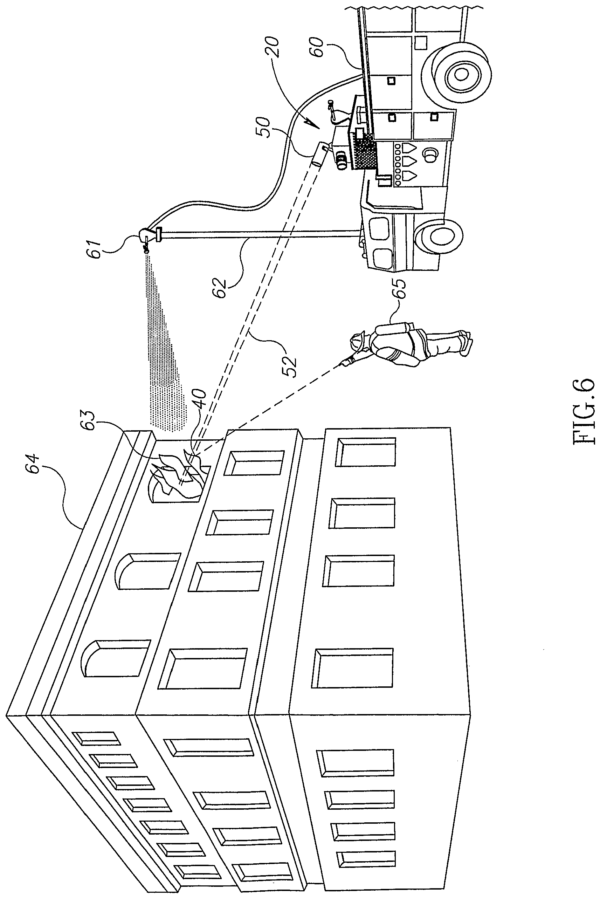

Fig. 6 schematically shows a firefighting application comprising 3D pointing system **20** in accordance with an embodiment of the present invention. In the example, 3D pointing system **20** is mounted on a fire truck **60** located at the scene, and is optionally coupled to a controllable light source 50. For clarity, the 3D pointing system and light source are shown disproportionally enlarged. A water cannon **61** capable of emitting a stream of water suitable for fire fighting is mounted on an elevated pedestal **62** of fire truck **60** so that it can be used to douse a fire **63** occurring in a building **64.**

A firefighter **65** points to fire **63.** 3D pointing system **20** takes a 3D image of firefighter **65** and determines a direction in which the firefighter is pointing and therefrom identifies ROI **40** on building **64,** where fire **63** is burning. 3D pointing system **20** further directs light beam **52** from light source to illuminate ROI **40.** Firefighter **65** views light beam **52** and either confirms that ROI **40** is positioned as desired, or if it is not, repositions his direction of pointing until he receives feedback confirming that the ROI is accurate. Subsequently, water cannon **61** emits a jet of water at ROI **40.** As the fire is doused at ROI **40,** firefighter **65** re-directs the water by pointing at another part of fire **63.**

It can be appreciated that 3D pointing system **20** in the embodiment of Fig. 6 enables firefighter **65** to combat fire **63** without having to physically handle a water hose. Pedestal **62,** which is mounted on fire truck **60,** can be optimized to support water cannon **61** and need not be designed to support the weight or space occupied by a firefighter. The pointing gesture interface employed by 3D pointing system **20** advantageously enables firefighter **65** to position himself closer to the scene of the fire, and conveniently direct the water stream. Visual feedback of the accuracy of ROI **40** provided by light beam **52** reduces the risk of injury or accidental destruction that could be caused by misdirecting water cannon **61.**

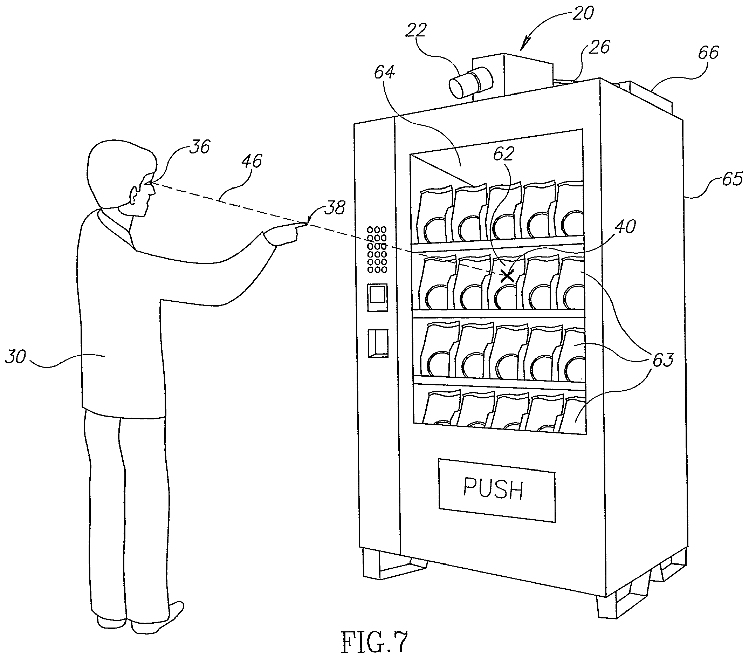

Fig.7 schematically shows a vending machine application comprising 3D pointing system **20** in accordance with an embodiment of the present invention. Person **30** wishes to purchase an item **62** from a selection of items **63** displayed on a display in a show window **64** of a vending machine **65.** 3D pointing system **20** is mounted on vending machine **65,** with 3D camera **22** oriented to view purchasers such as person **30** standing in front of vending machine **65.** In accordance with an embodiment of the invention, 3D pointing system 20 "learns" the location coordinates of each item **63** through an initial calibration procedure in which an installer points at each item **63.** In accordance with another embodiment of the present invention processor **24** (Fig. 1) of the 3D pointing system is provided with an internal map or table in which the 3D coordinates of each item **63** are recorded. Communication link **26** (Fig. 1) connects with a vending machine computer **66,** which controls various internal functions of vending machine **65.** It can be appreciated that 3D pointing system **20** could be provided as original equipment and thereby integrated with vending machine computer **66.**

Person **30** points to desired item **62** from the group of items **63** available for purchase. 3D pointing system **20** acquires a 3D image of person **30,** and processes the image, in accordance with the an embodiment of the invention, to determine a direction along which person 30 is pointing. The direction and coordinates of items 63 are used to determine an ROI **40,** which is identified with item 62. The identity of item 62 is is passed to vending machine computer **66** through communication link **26.** Vending machine computer **66** dispenses item **62** for pickup by person **30.**

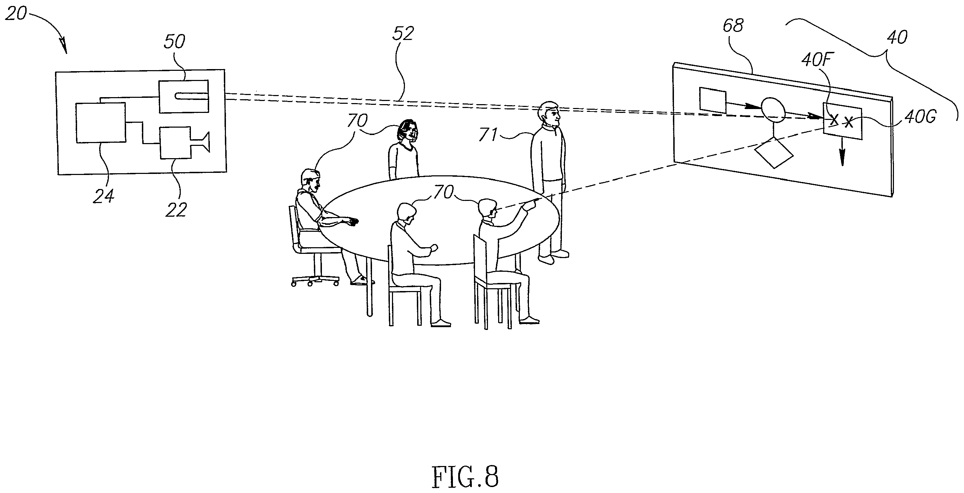

Fig. 8 schematically shows a smart conference room comprising 3D pointing system **20** in accordance with an embodiment of the present invention. The conference room optionally has a screen **68** viewed by a number of participants **70** at the meeting. Typically one of the participants is a presenter **71** who stands at the front of the room while other participants **70** are seated. 3D pointing system **20** includes a light source **50,** and is positioned in the conference room so the field of view of 3D camera **22** includes screen participants **70, 71** and optioanlly screen 68.

During the meeting, any number of participants **70** point to screen **68** in the course of their discussion. 3D pointing system **20** takes a 3D image of the room and processes the image to obtain regions of interest **40** on screen **68** from one or more of participants **70** pointing at screen **68.** The identity of each pointing person could be determined by any method known in the art, and could include for example, identifying the location of the person in the room, or assigning each person a uniquely identifiable patch or pointer.

Light source **50** directs light beam **52** at each of the regions of interest **40,** so that each participant can see which point on screen **68** is being pointed to by him or herself, and which, if any, are being pointed to by the other participants. For further clarity 3D pointing system **20** can be configured to assign a different color or image shape on screen **68** for each participant. When two or more participants point at the same time, light source **50** could display each ROI **40** sequentially, rapidly switching between them. Alternatively, light source **50** could be configured to have multiple light beams **52,** with different light beams **52** having different colors and each being assigned to display the ROI **40** being pointed to by a particular participant **70.** In Fig.7, standing presenter **71** points to ROI **40F,** and at the same time a seated participant **70** points to ROI **40G.** In some embodiments of the present invention, 3D pointing system **20** can initiate interaction with a person by predetermining and displaying a ROI to which the person is instructed to respond by pointing.

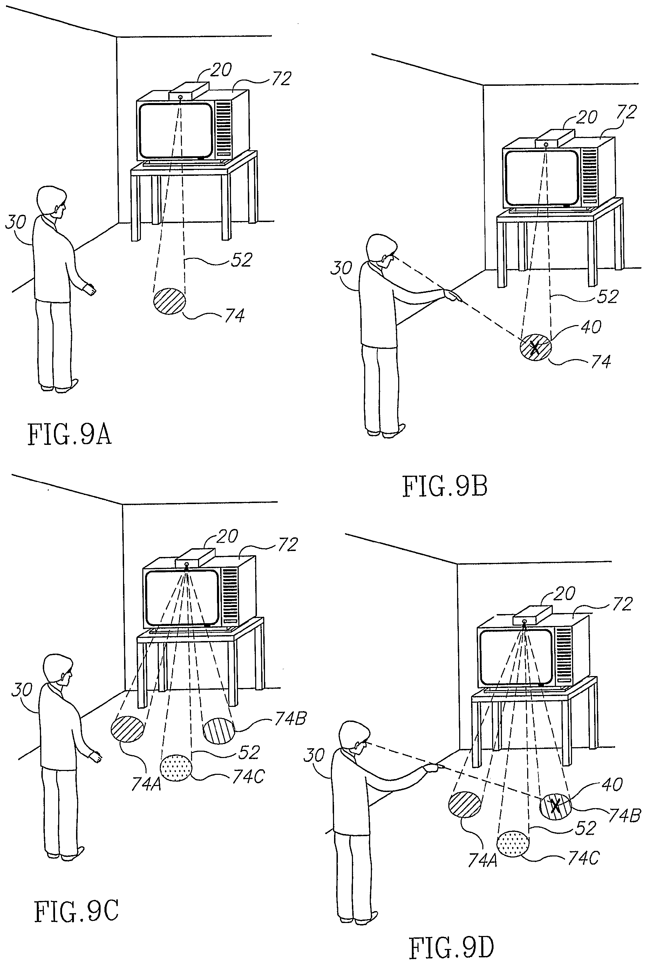

Fig. 9A to 9D schematically illustrate a game apparatus comprising 3D pointing system **20** and a game being played by a person using the apparatus, in accordance with an embodiment of the present invention. In the figures 3D pointing system **20** is shown, by way of example, mounted on a television set **72** in a home environment. In Fig. 9A 3D pointing system **20** initiates interaction with person **30** by displaying a predefined ROI **74,** optionally in the form of a circular image on the floor adjacent to person **30.** Circular image **74** is created by light beam **52** from light source **50** (not shown) optionally integrated with 3D pointing system **20.** Figure 9B shows person **30** pointing to predefined ROI **74,** and indicates that ROI **40** is within predefined ROI **74.** 3D pointing system **20** takes a 3D image of the scene, identifies ROI **40,** and confirms that person **30** has correctly pointed to circular image **74.** In an embodiment of the invention, 3D pointing system **20** scores person **30** according to the time taken to point to circular image **74.**

In Fig. 9C, 3D pointing system **20** displays three predefined regions of interest **74A, 74B,** and **74C,** in accordance with an embodiment of the invention. Generally the three predefined regions of interest are visually distinct from one another, such as by each having a unique color. In Fig. 9D person **30** responds to the display of three distinctive circular images by pointing to predefined ROI **74B,** presumably because the color or other aspect of that image comports with the rules of the game. As indicated, ROI **40** is within predefined ROI **74B.** 3D pointing system **20** takes a 3D image of the scene, identifies ROI **40,** and confirms that person **30** has pointed to circular image **74B** in accordance with a rule of the game. In an embodiment of the invention, 3D pointing system **20** scores person **30** according to the time taken to point to circular image **74B.**

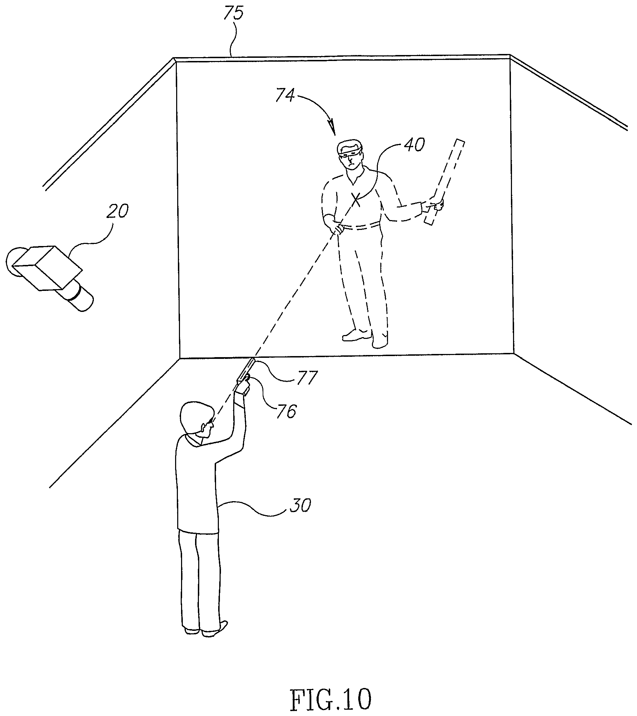

Fig. 10 schematically shows a security training application comprising 3D pointing system **20** in accordance with an embodiment of the present invention. 3D pointing system **20** displays predefined ROI **74** comprising an image of a criminal intruder, optionally on a wall **75.** Person **30** quickly points a gun **76** at predefined ROI **74** to simulate apprehending a criminal intruder. 3D pointing system **20** takes a 3D image of the scene, identifies ROI **40,** and confirms, assuming ROI **40** is within predefined ROI **74,** that person **30** has successfully "shot" the intruder. In processing the 3D image to determine ROI **40,** 3D pointing system **20** uses a tip **77** of gun **76** for pointing tip region **38** (Fig. 1) to determine a pointing direction for person **30.** In an embodiment of the invention, 3D pointing system **20** scores person **30** according to the time taken to "shoot" the criminal.

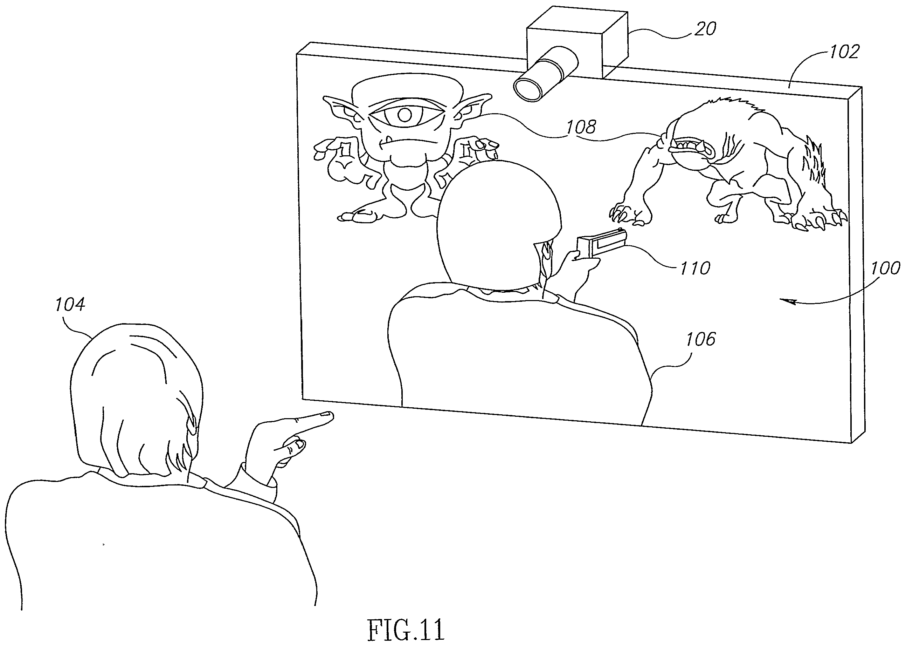

In accordance with an embodiment of the invention, a 3D pointing system is used in a "first person shooter" game in which a player observes and participates in the action of a computer game environment from his own point of view. Fig. 11 schematically shows a first person shooter game in which a game environment 100 is displayed on a video screen 102 and a game player 104 interacts with the environment by animating an avatar 106 using a 3D pointing system 20. By way of example, the game is a "Space Patrol" game in which the player is a space marshall defending against alien life forms 108 and the avatar is armed with a ray gun 110.

The game proceeds from the point of view of player 104 represented by avatar 106, portions of which are shown from behind the avatar's head. Player 104 indicates a direction in which he or she wants to shoot to neutralize an alien by pointing with a finger. 3D pointing system 20 images the player, determines a direction in which the player points and transmits data indicating the pointing direction to a game controller (not shown), optionally integrated with 3D pointing system 20. The game controller points the avatar's weapon 110 in the desired direction and shoots when player 104 provides a suitable gesture, such as making a throwing motion with a hand not used to point.

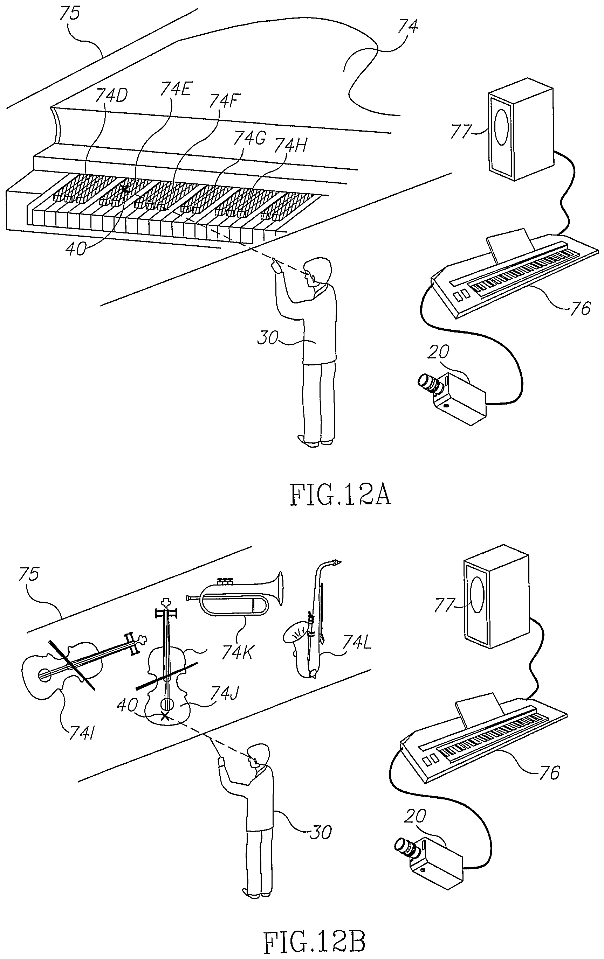

Figures 12A and 12B schematically show a musical application comprising 3D pointing system **20** in accordance with an embodiment of the present invention. In the figures 3D pointing system **20** connects to an external musical instrument or synthesizer **76** connected to a speaker **77.** 3D pointing system **20** displays, optionally, on a wall **75** predefined ROI's **74** comprising one or more images of musical instruments. In Fig. 12A predefined ROI **74** comprises a piano image having individual key images **74D, 74E, 74F,** 74G, **and 74H.** Person **30** points to a particular key **74E.** 3D pointing system **20** determines that ROI **40** pointed to by person **30** is within key **74E,** and sends an appropriate signal to instrument **76** to play a real musical note corresponding to image key **74E.**

In Fig. 12B, 3D pointing system **20** displays predefined ROI's **74** comprising images **741, 74J, 74K,** and **74L** of different musical instruments. Person **30** points for example at cello image **74J.** 3D pointing system **20** identifies ROI **40** pointed at by person **30** and upon confirming that ROI **40** is within predefined ROI **74J,** signals synthesizer **76** to play a cello musical note. In a further embodiment, person **30** may point at different instruments simultaneously (e.g. using two hands), and 3D pointing system **20** identifies the selected instruments and plays musical notes corresponding to both instruments. In the embodiments of Figs. 12A and B, person **30** can play a continuous musical piece by pointing or making a series of pointing gestures at one or more different parts of the displayed instruments, with each pointing gesture producing a corresponding musical sound.

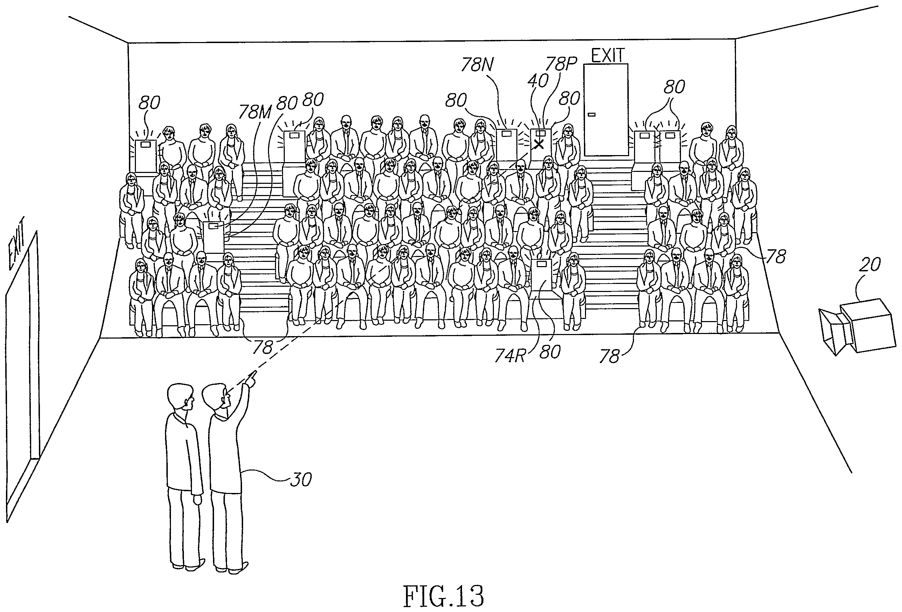

Fig. 13 schematically shows a theatre seating application comprising 3D pointing system **20** in accordance with an embodiment of the present invention. 3D pointing system **20** is located in a theatre having a multiplicity of seats **78.** In this embodiment, instead of having a light source that displays an image by shining a light beam, 3D pointing system **20** connects to a local electrical network (not shown) capable of turning on a light **80** at any individual seat **78.** Upon a person or a group of persons **30** entering late to a dark theatre, controller **24** (in system 20, *e.g.* Fig. 8), or an external computer (not shown), could activate light **80** at all available seats. Person **30** could scan the theatre and point to the preferred seat or group of seats **78.** In this case person **30** is with a companion, and points to seat **78N** or adjacent seat **78P,** hoping to secure both seats. 3D pointing system **20** takes a 3D image of the scene, identifies ROI **40,** and either itself or in conjunction with the external computer determines that ROI **40** corresponds to selected seat **78P.** The computer could then turn off the other seat lights **80** in the theatre, for example, and leave on the seat lights **80** at selected seats **78P** and **78N** until persons **30** reach them.

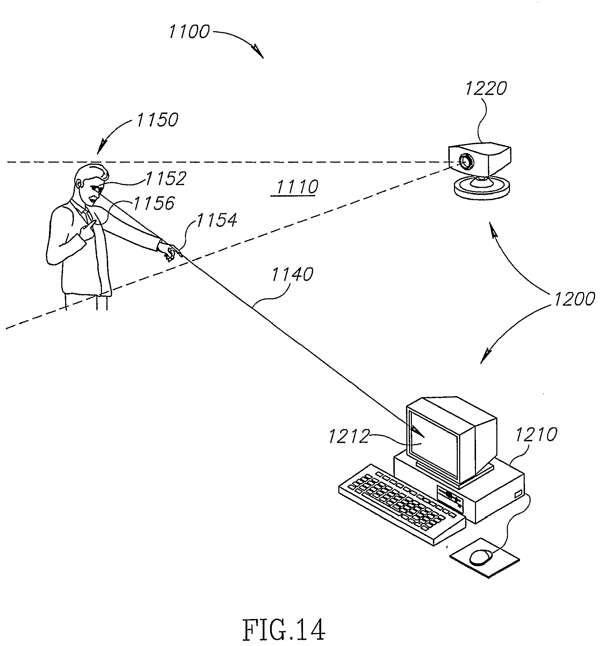

Attention is now turned to Fig. 14, which is a schematic illustration of a 3D pointing system 1100 for remotely and intuitively providing control commands to computerized system, according to an embodiment of the invention. Control commands to system 1100 may be based on gesture recognition of the body 1150 of a user of the system. System 1100 is optionally a time of flight (TOF) system and may comprise a computerized system 1200 comprising at least a computer 1210 and a 3D camera 1220. Computer 1210 may comprise a computing unit loaded with appropriate software and a screen 1212 on which said software may present graphical images, symbols and other data, which may require response from a user having a body 1150 by way of pointing at a graphical entity on screen 1212 and possibly further by dictating to computerized system 1200 commands that need to be effected to the graphical entity. Computerized system 1200 may be further loaded with software, which supports 3D depth measurement of a body based on TOF principles. Based on the 3D imaging, the momentary position in space of certain points on body 1150, such as a first point 1152, located for example at the iris of an eye of user's body 1150 and a second point 1154 located, for example at the end of pointing finger of the user's hand. Camera 1220 may have a spatial section of interest covering at least section 1110 and it may be located slightly aside of screen 1212. In yet another embodiment of the invention, camera 1220 may be located close to screen 1212. The use of 3D imaging based on TOF calculations may provide continuous data of the spatial position of points 1152 and 1154. Accordingly, computing system 1200 may continuously provide data representing a line-of-sight (LOS) 1140 connecting points 1152 and 1154 and extending to screen 1212.

In some embodiments, the initial location of screen 1212 with respect to camera 1220 may need to be calibrated. Such calibration may involve pointing at an intended point on the screen and instructing system 1200 of the difference between the intended point and the point at which system 1200 has calculated the hit-point of LOS 1140. Such calibration may be required each time the setting of screen 1212 has changed with respect to camera 1220 and it may be done using, for example, a specific software for controlling the calibration process.

According to some embodiments of the invention, a user may intuitively point at a desired point on screen 1212 and aim at a selected graphical entity on it, without needing to have any specific device and without needing to be connected, by wire or wirelessly, to system 1100 for this purpose. Using principles of TOF based 3D imaging, it is further possible to recognize gesture movement of an additional organ or a portion of an organ in user's body 1150, such as, for example, right-hand long finger 1156. Computerized system 1200 may be trained to recognize a plurality of different movements and gestures of user's body 1150 and/or of organs of body 1150 and to accord certain, predefined commands to each such organ and/or movement.

For example, in the pointing example detailed above, while the computation of LOS 1140 may be used for selecting a graphical entity on screen 1212, gesture recognition of long finger 1156 may be used for providing one or more control commands for that graphical entity, such as, in a non-limiting example, activation of software associated with the entity or for rotating a graphical symbol on the screen or for expending its size, and the like.

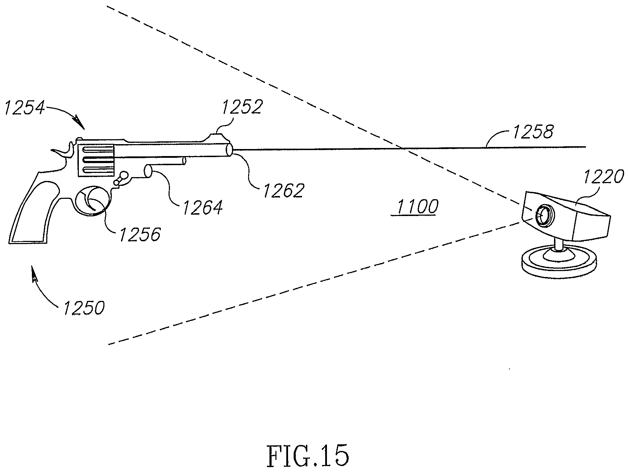

According to an embodiment of the invention, a user may use a pointing object which is optionally inactive (*i.e.* not connected, electrically, to system 1100) in order to point at a selected graphical object on screen 1212, and further to activate or inactivate software programs at the user's command. Fig. 15, shows a schematic illustration of a system comprising a pointing device 1250 for intuitive pointing according to an embodiment of the invention. Pointing device 1250 may be a passive device which does not require any electrical connection to system 1100 (Fig. 14). Pointing device 1250 may be formed to comfortably fit into a user's hand, such as like a pistol. Yet, it would be apparent that pointing device 1250 may have any other shape, as may be desired, according to the applications to which it is adapted, to the user's preferences, etc. An imaginary line-of-pointing 1258 may be defined as the "line-of-firing" of pointing device 1250. As described above, system 1100, to which pointing device 1250 may be connected, may identify line 1258 according to the principles of operations described above.

In an embodiment of the invention, pointing device 1250 may include a frontal visual point 1252 and a rear visual point 1254 defined in close vicinity to line 1258 in pointing device 1250. Visual points 1252 and 1254 may be placed on pointing device 1250 so that they are easily seen by camera 1220 when pointing device 1250 is in the field of view 1110 of camera 1220. Visual points 1252 and 1254 may further have distinct visual property, such as a high reflective feature, reflectivity with specific color or phase, and the like. This feature may be used to ease the identification of the gesture of pointing device 1250 for purposes of identification of line-of-pointing 1258. According to an embodiment of the invention, pointing device 1250 may further be equipped with a trigger-like assembly 1256. Assembly 1256 may be designed so that when pulled by the user it discloses a reflective area 1264 that is visible to and identifiable by camera 1220. Accordingly, camera 1220 may identify that trigger 1256 was pulled, and may send this information to system 1100, in order to activate, for example, a relevant piece of software. In an embodiment of the present invention, pointing device 1250 may comprise a light source 1262 which may be activated/deactivated by pulling/releasing trigger 1256. As with reflective area 1264, light source 1262 may indicate to system 1100, when identified as in ON status, that trigger 1256 was activated.

In yet another embodiment of the present invention, either reflective area 1264 or light source 1262, when identified by camera 1220 and system 1100, may further be used to improve the accuracy and certainty of calculation of pointing line 1258 by adding a third point with high certainty of identification as their location in pointing device may be preloaded to system 1100.

In the description and claims of the application, each of the words "comprise" "include" and "have", and forms thereof, are not necessarily limited to members in a list with which the words may be associated.

The invention has been described using various detailed descriptions of embodiments thereof that are provided by way of example and are not intended to limit the scope of the invention. It is intended that the scope of the invention be limited only by the claims and that the claims be interpreted to include all such variations and combinations.

## Claims

1. A method of determining a direction in which a person (30) is pointing comprising:
acquiring 3D depth images of the person using Time of Flight, TOF, 3D imaging; for each 3D depth image of the 3D depth images determining a first point (P1; 1152) of an eye (36) of the person (30) based on the 3D depth image; determining a second point (P2; 1154) of a pointing region of a body part or an instrument that the person orients to indicate a pointing direction based on the 3D depth image, determining a line (46; 1140) connecting the first and second points and extending to a screen (1212); and determining a pointing direction for the person responsive to the line.

2. A method according to any of the preceding claims wherein the pointing region comprises a tip (38) of a finger and/or wherein the pointing region comprises a tip of an instrument.

3. A method according to any of the preceding claims and comprising using the pointing direction to determine a region of interest (ROI) in an environment in which the person (30) is located to which the person is pointing, in particular illuminating the ROI to which the person is pointing.

4. A method according to claim 3 and comprising interfacing the person (30) with a computer application responsive to the pointing direction, in particular comprising animating an avatar of the person generated by the computer responsive to the pointing direction.

5. A method according to claim 4 wherein the application comprises a computer game.

6. A method according to claim 5 wherein the computer game generates ROIs that are images to which the person (30) is required to point to play the game.

7. A method according to claim 6 wherein the images comprise images of musical instruments, in particular wherein the computer generates sounds responsive to which musical instrument the person (30) is determined to be pointing.

8. A method according to claim 6 wherein the images comprise images to which the person (30) is required to point to score.

9. A method according to claim 8 wherein the score is greater to an extent that the person (30) is more efficient in pointing to a given image, in particular wherein efficiency is a function of how fast the person points to a given image.

10. A method according to claim 9 wherein efficiency is a function of how accurately the person (30) points to a given image.

11. A computer readable medium comprising an instruction set for implementing a method according to any of the preceding claims.

12. Apparatus for determining a direction in which a person (30) is pointing comprising: at least one Time of Flight - TOF 3D camera (22; 1220) that provides 3D images of a scene comprising the person; and a processor operable to process the 3D images in accordance with any of claims 1-4 to determine a pointing direction.

## Patentansprüche

1. Verfahren zum Bestimmen einer Richtung, in die eine Person (30) zeigt, umfassend:
Erlangen von 3D-Tiefenbildern der Person unter Verwendung einer Time-of-Flight, TOF,-3D-Bildgebung;
bei jedem 3D-Tiefenbild der 3D-Tiefenbilder Bestimmen eines ersten Punkts (P1; 1152) eines Auges (36) der Person (30) basierend auf dem 3D-Tiefenbild, Bestimmen eines zweiten Punkts (P2; 1154) eines Zeigebereichs eines Körperteils oder eines Instruments, das die Person ausrichtet, um eine Zeigerichtung basierend auf dem 3D-Tiefenbild anzuzeigen, Bestimmen einer Linie (46; 1140), die den ersten und den zweiten Punkt verbindet und sich auf einen Bildschirm (1212) erstreckt, und Bestimmen einer Zeigerichtung für die Person in Abhängigkeit der Linie.

2. Verfahren nach einem der vorhergehenden Ansprüche, wobei die Zeigerichtung eine Spitze (38) eines Fingers umfasst und/oder wobei die Zeigerichtung eine Spitze eines Instruments umfasst.

3. Verfahren nach einem der vorhergehenden Ansprüche und umfassend das Verwenden der Zeigerichtung, um einen Bereich von Interesse (ROI - region of interest) in einer Umgebung zu bestimmen, in der sich die Person (30) befindet, die auf diesen zeigt, wobei insbesondere der ROI, auf den die Person zeigt, beleuchtet ist.

4. Verfahren nach Anspruch 3 und umfassend das Verbinden der Person (30) mit einer Computeranwendung in Abhängigkeit der Zeigerichtung, insbesondere umfassend das Animieren eines Avatars der Person, der von dem Computer in Abhängigkeit der Zeigerichtung erzeugt wird.

5. Verfahren nach Anspruch 4, wobei die Anwendung ein Computerspiel umfasst.

6. Verfahren nach Anspruch 5, wobei das Computerspiel ROIs erzeugt, die Bilder sind, auf die die Person (30) zeigen soll, um das Spiel zu spielen.

7. Verfahren nach Anspruch 6, wobei die Bilder von Musikinstrumenten umfassen, wobei insbesondere der Computer Klänge erzeugt, die von einem Musikinstrument abhängen, auf das die Person (30) zu zeigen bestimmt ist.

8. Verfahren nach Anspruch 6, wobei die Bilder umfassen, auf die die Person (30) zeigen soll, um Punkte zu erzielen.

9. Verfahren nach Anspruch 8, wobei der Punktestand insoweit größer ist, als die Person (30) leistungsstärker beim Zeigen auf ein gegebenes Bild ist, wobei insbesondere Leistungsfähigkeit eine Funktion ist, wie schnell die Person auf ein gegebenes Bild zeigt.

10. Verfahren nach Anspruch 9, wobei Leistungsfähigkeit eine Funktion ist, wie genau die Person (30) auf ein gegebenes Bild zeigt.

11. Computerlesbares Medium, umfassend einen Anweisungssatz zum Implementieren eines Verfahrens nach einem der vorhergehenden Ansprüche.

12. Einrichtung zum Bestimmen einer Richtung, in die eine Person (30) zeigt, umfassend:
mindestens eine Time-of-Flight, TOF,-3D-Kamera (22; 1220), die 3D-Bilder einer Szene bereitstellt, die die Person enthält; und einen Prozessor, der betriebsfähig ist, um die 3D-Bilder in Übereinstimmung mit einem beliebigen der Ansprüche 1-4 zu verarbeiten, um eine Zeigerichtung zu bestimmen.

## Revendications

1. Procédé de détermination d'une direction qu'une personne (30) indique, consistant :
à acquérir des images de profondeur en 3D de la personne à l'aide d'une imagerie 3D en temps de vol (TOF) ; pour chaque image de profondeur en 3D des images de profondeur en 3D à déterminer un premier point (P1; 1152) d'un oeil (36) de la personne (30) en se basant sur l'image de profondeur en 3D ; à déterminer un second point (P2 ; 1154) d'une région de pointage d'une partie de corps ou d'un instrument que la personne oriente pour indiquer une direction de pointage en se basant sur l'image de profondeur en 3D, à déterminer une ligne (46 ; 1140) reliant les premier et second points et s'étendant jusqu'à un écran (1212) ; et à déterminer une direction de pointage pour la personne en réponse à la ligne.

2. Procédé selon l'une quelconque des revendications précédentes, dans lequel la région de pointage comprend un bout (38) d'un doigt et/ou dans lequel la région de pointage comprend un bout d'un instrument.

3. Procédé selon l'une quelconque des revendications précédentes et consistant à utiliser la direction de pointage pour déterminer une région digne d'intérêt (ROI) dans un environnement dans lequel la personne (30) se trouve, que la personne indique, en particulier à éclairer la région ROI que la personne indique.

4. Procédé selon la revendication 3 et consistant à mettre en interface la personne (30) avec une application sur ordinateur en réponse à la direction de pointage, en particulier consistant à animer un avatar de la personne généré par l'ordinateur en réponse à la direction de pointage.

5. Procédé selon la revendication 4, dans lequel l'application comprend un jeu d'ordinateur.

6. Procédé selon la revendication 5, dans lequel le jeu d'ordinateur génère des régions ROI qui sont des images que la personne (30) doit indiquer pour jouer au jeu.

7. Procédé selon la revendication 6, dans lequel les images comprennent des images d'instruments musicaux, en particulier dans lequel l'ordinateur génère des sons en réaction à un instrument musical qui est déterminé par l'indication de la personne (30).

8. Procédé selon la revendication 6, dans lequel les images comprennent des images que la personne (30) doit indiquer pour marquer des points.

9. Procédé selon la revendication 8, dans lequel le score est plus important à mesure que la personne (30) est plus efficace dans le pointage vers une image donnée, en particulier dans lequel l'efficacité est une fonction de la rapidité avec laquelle la personne indique une image donnée.

10. Procédé selon la revendication 9, dans lequel l'efficacité est une fonction de la précision avec laquelle la personne (30) indique une image donnée.

11. Support lisible par ordinateur comprenant un jeu d'instructions pour mettre en oeuvre un procédé selon l'une quelconque des revendications précédentes.

12. Appareil pour déterminer une direction qu'une personne (30) indique, comprenant : au moins une caméra 3D à temps de vol (TOF) (22 ; 1220) qui fournit des images en 3D d'une scène comprenant la personne ; et un processeur permettant de traiter les images en 3D conformément à l'une quelconque des revendications 1 à 4 pour déterminer une direction de pointage.
